# EUROPEAN PATENT APPLICATION

(11) **EP 1 626 060 A1**
(43) Date of publication of application: **15.02.2006**
(21) Application number: 05106562.1
(22) Date of filing: 18.07.2005
(51) Int. Cl.: C08F 220/18, C09D 133/06

(54) **Monomeric composition, copolymers obtainable therefrom and aqueous dispersions containing them**

(30) Priority: 21.07.2004 ES 200401785
(71) Applicant: Celanese Emulsions Iberica, S.L., 43206 Reus (ES)
(72) Inventor: Perez Lorenzo, Guillermo c/o CELANESE E.I. S.L., 43206, Reus (ES); Llaberia Munoz, Jordi c/o CELANESE E.I. S.L, 43206, Reus (ES); Tortosa Tendero, Javier c/o CELANESE E.I. S.L., 43206, Reus (ES); Marcelo Marti, Josep c/o CELANESE E.I. S.L., 43206, Reus (ES)
(74) Representative: Ponti Sales, Adelaida

(57) **Abstract**

The invention comprises aqueous dispersions of copolymers of acrylic and/or methacrylic esters for laminating plastic films onto other printed or unprinted media, with improved technical properties, and particularly better immediate adhesion and better embossing resistance. Said dispersions lie within a concentration range of between 30% and 75% in water, and the glass transition temperature (Tg) of the copolymer is between -40°C and +25°C.

Said copolymers are obtained by the technique of polymerisation by free radicals in aqueous emulsion of the (a), (b), (c) and (d) monomers disclosed in the invention.

## Description

### Field of the invention

The object of the invention is to provide aqueous dispersions of copolymers of acrylic and/or methacrylic esters useful for laminating plastic films onto other media, whether or not printed.

The aqueous dispersions of this invention improve the technical and environmental aspects of the adhesives obtained, for lamination in general and for utilisation thereof in Graphic Arts in particular.

### Background of the invention

Adhesives for lamination and for Graphic Arts Lamination (FPL) have been used for years for protecting printed media with a plastic film. The adhesive is normally applied onto the plastic medium (polyethylene/PE, biaxially oriented polypropylene/BOPP, polyethylenterephthalate/PET, polyamide/PA, etc.) to which an electrical crown treatment has been applied, is left to dry in the air or under hot or forced air stream, etc., and then, once dry, is laminated onto the printed medium by applying pressure and a moderate temperature that does not affect the plastic film.

Although less usual, the lamination can be carried out without application of heat on the line (moist-process lamination) by applying the adhesive either onto the plastic film or onto the printed medium.

Although at present many of the adhesives used are aqueous, with the advantages this represents in terms of reduction of emissions, toxicity and workzone hazards, etc., part of the market continues to make use of solvent-based adhesives.

Adhesives for Graphic Arts Lamination (FPL) must comply with a number of requirements, apart from the adhesive properties as such.

In particular, adhesives for FPL must show simultaneously good adherence onto the plastic film and onto the great variety of printed media and inks habitually used.

Moreover, they must show impeccable transparency, absence of coagulates or solid particles, capacity for wetting the various plastic films and all kinds of printing inks, appropriate flow properties, minimum foam generation, stability to the shear that arises in the process of application of the adhesive, etc.

Furthermore, adhesives for FPL must provide sufficient immediate adhesion, i.e., sufficient peel resistance immediately following lamination, so that the final laminate can be handled and processed (stacked, cut, bend, etc.) without having to wait for the adhesive to cure.

Moreover, and most particularly, the increased number of FPL applications calling for embossing of the end laminate has raised requirements to a level such that only certain systems based on crosslinking technologies are so far capable of meeting them.

US patent 4.529.772 (Druschke et al.) of 16 July 1985 discloses copolymer dispersions with a Tg of between -40°C and -10°C containing 1% to 5% of carbonyl- or dicarbonyl-functional monomers such as Acrolein, DiacetoneAcrylamide, Methacryloxyalkylpropanal, etc., based on the total monomers present, in the presence of water-soluble dihydrazides in an approximately equimolar proportion.

This crosslinking system is well-known, and the reaction of carbonyl- or di-carbonyl-functional polymers with polyfunctional hydrazides is described in many patents, such as in US patents 3.345.336 and 4.210.565.

In US patent 4.529.772, the level and type of the usual carboxylic monomers plays no significant role other than the usual one of stabilising the polymer, with proportions of 1% to 4% mentioned.

Previously, US patent 4.377.433, one of the first to disclose BOPP aqueous emulsions for laminating with printed paper or cardboard, relates to two-component systems in which an aqueous dispersion of ethylene vinylacetate (EVA) containing epoxy groups is mixed immediately before use with another EVA dispersion containing amino groups. The epoxy-amine reaction is responsible for the essential properties of the adhesive, whose short potlife and two-component nature make it rather impractical and costly.

As reference, US patent 5.474.638 (Kholhammer, et al.) of 12 December 1995 also discloses aqueous polymer dispersions for FPL in which a combination of amide-functional comonomers (acrylamide, methacrylamide, etc.) and another hydroxyl-functional comonomer (hydroxyethylacrylate, hydroxypropylmethacrylate, etc.) are incorporated into the polymer matrix together with sulphonated monomers (vinyl sulphonate, styrene sulphonic acid, etc.).

Once again, no special importance is accorded to the carboxyl-functional monomers (acrylic acid, methacrylic acid, etc.), which are given in the usual proportions of 0.1% to 4% and with no apparent purpose other than the usual one of lending the dispersion thereby obtained sufficient mechanical and chemical stability.

Finally, US patent 6.376.094 (Dames et al.) of 23 April 2002 relates to polymer emulsions for lamination in which the aforesaid properties are obtained by means of a monomer (b) consisting of a mixture of at least two acrylic esters with two alcohols of different chain length, particularly a C₂-C₄ and a C₆-C₁₂, such as mixtures of butyl acrylate 2-ethylhexyl acrylate.

In the aforesaid patent, the carboxylic monomers (or monomers (c)) have no purpose other than to lend chemical and mechanical stability, so that all the examples described in said patent use in their composition the same amount and type of monomer (c), i.e. 3% acrylic acid over total monomers.

The reactive technologies are expensive, and the chemistry upon which they are based results in polymer emulsions that are far from complying with modern regulations on adhesives that can come into contact, even indirect contact, with consumer, food or cosmetic products.

The primordial objective of this application is therefore to make available to industry a new technology which, using only monomers and conventional processes, is capable of leading to products capable of complying with the various regulations on adhesives for the packaging of foods, cosmetics and other human-consumption-related products, of meeting the growing demand for FPL adhesives capable of complying with all the requirements, and particularly the aforesaid requirements of immediate handling ("quick converting") and embossing resistance, in a cleaner, safer and less expensive way in terms of the raw materials used.

### Summarised description of the invention

It has been found that the above-mentioned set of properties required of adhesives for lamination and FPL is achieved with polymers in emulsion that present a composition as claimed in claim 1 of the present specification and, most specially, a composition in which the proportions of monomers containing carboxylic groups lie within the ranges stated therein.

It is by no means obvious that the role played by said monomers (which are usually present to a greater or less extent in practically all aqueous emulsion polymers in order to lend them sufficient chemical and mechanical stability) is the key to obtaining the aforesaid properties of initial peel resistance and embossing resistance.

A first aspect of the present invention is to provide a monomeric composition as defined in claim 1.

A second aspect of the present invention is to provide a copolymer obtainable from said monomeric composition as defined in claim 26.

A third aspect of the present invention is to provide an aqueous dispersion that includes said copolymer as defined in claim 31.

A fourth aspect of the present invention is the utilisation of said aqueous dispersion for lamination adhesives and, in particular, for lamination adhesives for Graphic Arts.

### Definitions of the invention

In the present invention, "monomer (a)" is taken to mean a monomer whose homopolymer has a glass transition temperature (Tg) greater than 0°C, such as Methyl Methacrylate (MMA), Vinyl Acetate (VAM), Vinyl Chloride (VCl), Styrene (St) or Butyl Methacrylate (BMA). Particularly preferred are MMA and BMA.

In the present invention, "monomer (b)" is taken to mean a monomer whose homopolymer has a glass transition temperature (Tg) lower than 0°C, such as Ethyl Acrylate (EA), Butyl Acrylate (BA), Octyl Acrylate (OA), 2-EthylHexyl Acrylate(2EHA), Lauryl Methacrylate(LaMA). Particularly preferred are BA and 2EHA.

In the present invention, "monomer (c)" is taken to mean a monomer which is copolymerisable with (a) and (b) monomers and which contains a free acid group or a group capable of producing same and that does not contain any function other than the aforesaid one, such as acrylic acid (AA), methacrylic acid (MAA), itaconic acid (IA), maleic anhydride (Manh), acrylamidepropylsulphonic acid (AMPS) and salts thereof. Particularly preferred are AA and MAA.

In the present invention, "monomer (d)" is taken to mean a monomer which is copolymerisable with (a), (b) and (c) monomers, such as HydroxyEthyl Acrylate, HydroxyEthylMethacrylate, Acrylonitrile, Acrylamide, Methacrylamide, n-methylolAcrylamide, GlycidylMethacrylate, etc. Monomer (d) is not essential in the monomeric composition of the invention, so the amount thereof that is present varies between 0% and 20%, calculated over the sum total of (a) + (b) monomers. Monomer (d) is characterised in that it does not contain any group or function other than the double C=C bond that characterises all monomers, or in that it is capable of carrying out specific crosslinking reactions with the other monomers that make up the polymeric composition or with itself, or in that it is capable of carrying out specific crosslinking reactions with other reactive components once the polymerisation process of (a), (b), (c) and (d) monomers has been completed.

### Detailed description of the invention

The invention relates, under a first aspect, to a monomeric composition that comprises:
(a) from 0% to 50% of at least a monomer a) whose homopolymer has a glass transition temperature (Tg) higher than 0°C;
(b) from 50% to 100% of a single monomer b) whose homopolymer has a glass transition temperature (Tg) lower than 0°C;
(c) from 4% to 12%, calculated over the sum of (a) + (b) monomers, of at least one monomer c) copolymerisable with the foregoing and that contains a free acid group or a group capable of producing same and that has no functionality other than the aforesaid one;
(d) from 0% to 20%, calculated over the sum of (a) + (b) monomers, of at least another monomer d) copolymerisable with the aforesaid.

More particularly, the monomeric composition comprises :
- between 5% and 25 % of at least one monomer a);
- between 75% and 95% of a single monomer b);
- between 5% and 10% of at least one monomer c), calculated over (a) + (b);
- between 0% and 5% of at least one monomer d), calculated over (a) + (b).

And more particularly, the monomeric composition includes a monomer c) that comprises mixtures of MAA with other monomers c). More preferably still, the amount of MAA in relation to the total monomer c) is at least 20%. More preferably still, the amount of MAA is more than 50% in relation to the total monomer c); and yet more preferably, the amount of MAA is 100% of the total monomer c).

The glass transition temperature (Tg) of said copolymers obtainable from said composition can be determined by conventional methods known in the state of the art, such as DTA (Differential Thermal Analysis) or DSC (Differential Scanning Heatimetry) or, by way of an initial estimate, by using the Fox equation.

Said copolymers have a Tg that is preferably between -60°C and + 60°C, more preferably between -40°C and +40 °C and more preferably still between -35°C and + 25°C.

Said copolymers are prepared in accordance with the conventional radical polymerisation methods based on aqueous phase, although their preparation by means of polymerisation in solvents followed by dispersion in water, miniemulsion or suspension is not ruled out.

An object of the present invention is therefore the copolymer obtainable by polymerisation of the monomeric composition defined in the attached claims. As mentioned above, said polymerisation can be carried out by free radicals in aqueous emulsion, miniemulsion, suspension or solvent according to conventional methods.

To prepare them, use is made of appropriate water-soluble colloids and/or surfactants usual in this technique.

Examples of PvOH-type (Polyvinyl Alcohol) colloids are Celvol 504 and Celvol 523 (® from Celanese).

Examples of HEC-type (HydroxyEthyl Cellulose) colloids are Tylose H 40 and Tylose H 4000 (® from Clariant).

Examples of monofunctional or difunctional anionic surfactants are Texapon K12 (® Cognis), Maranil PA-20 (® Cognis), Aerosol DPOS45 (® Cytec).

Examples of non-ionic surfactants are Arkopal N-300 (30 EO, ® from Clariant), Synperonic A-50 (50 EO, ® from ICI surfactants), Genapol O-100 (10 EO, ® from Clariant).

Examples of oxyethylenated-sulphonated surfactants are Hostapal BV (® from Clariant), Disponil FES 77 (® from Cognis).

Examples of other surfactants that contribute towards the wetting-agent properties of the end adhesive are those based on sulphosuccinic acid chemistry, such as Aerosol OT-75 (® from Cytec).

The amounts of surfactants and/or colloids range between 0.1% and 10% of the total monomers present in the polymerisation process.

The free radicals necessary to initiate and to complete the polymerisation process are obtained by adding water-soluble peroxo-compounds that decompose into radicals at the process temperatures. Examples thereof are the ammonium salts and alkaline metal salts of peroxodisulphuric acid, oxygenated water and terbutyl peroxide.

In order to generate the necessary free radicals, it is possible to use thermal processes, with typical process temperatures of between 70°C and 95°C, in which the generators of radicals are the compounds disclosed above, such as redox processes, with typical temperatures of between 50°C and 75°C, in which the peroxo-compound is accompanied by a water-soluble reducing agent such as sodium sulphite, sodium metabisulphite, sodium formaldehydesulphoxylate, ascorbic acid, etc., in which small amounts of catalysis accelerators can be used, such as the salts of polyvalent metals (Fe++, Co++, etc.).

The total amount of these radical-generating systems ranges between 0.05% and 5%, preferably between 0.25% and 1% of the total amount of monomers present.

Although not essential for the purpose of the present invention, Chain Transfer Agents (CTA) can also be used during the polymerisation process in order to control the average molecular weight of the polymer undergoing formation. Typical examples are the mercaptans or thiols (compounds with an end-SH group), such as ter-butylmercaptan, n-dodecyl-mercaptan, etc. The usual proportions range between 0.05% and 0.5% of total monomer.

The polymerisation process can be carried out at temperatures of between 50°C and 100°C, preferably between 60°C and 90°C.

The process can be executed as a batch process (with all the monomer present in the reaction vessel at the start of the process), or by metering, in which a certain fraction of the total mixture of monomers is placed in the reaction vessel at the start of the process, and the rest of the mixture of monomers is fed in from an external dispensing tank, either separately through parallel dispenser feeds or else all together, or all together and pre-emulsioned with part of the water and surfactants and/or colloids laid down in the formula.

This dispensing can likewise be continuous, in pulses, or fractionated into phases, as appropriate.

Similarly, the initial charge can include a small amount of the polymer (from a previous batch or from any other polymer in emulsion) in order to better regulate the size and distribution of sizes of the particles present in the final dispersion ("seeded process").

Similarly, the generator(s) of radicals can be present in their entirety from the start of the process, dispensed from a tank external to the reaction vessel, or can be added in a fraction at the start and then the remainder dispensed during the rest of the process.

The dispersion obtained thereby possesses dry substance content of between 30% and 75%, preferably between 40% and 60%.

A further object of the invention is therefore the aqueous dispersion that includes said copolymer and the aqueous dispersion that also includes coadjuvants such as wetting agents, levellers, anti-foam agents, thickeners, rheology modifiers, pH regulators, antioxidants, crosslinking agents, adherence promoters and/or biocides.

The dispersion thus obtained can be used directly as an adhesive for the lamination of plastic films and for Graphic Arts (FPL) or can be appropriately diluted with water and/or emulsionable or water-miscible cosolvents until it attains the right viscosity for application thereof in the lamination machines available in the market, such as those from the firms Billhöfer (Germany), Paperplast (Italy) or Autobond (U.K.).

The product thus obtained can likewise be additivated appropriately with tackiness agents, wetting agents, antifoaming agents, thickeners, etc., as appropriate to the conditions of use.

The invention will be described from this point onwards in greater detail, with reference to the examples which follow, though without thereby limiting the invention to the percentages and compositions disclosed therein.

### EXAMPLES

For the sake of simplicity, all the polymers were prepared following the same outline.

Into a spherical glass reaction vessel with three 3 inlets and 4 litres capacity, equipped with condenser, dispensing funnels, stirring with safety seal and heating bath are charged 588 g of demineralised water, 20g of an anionic surfactant at 20% concentration, consisting of the sodium salt of dodecyl-benzeno-sulphonic acid (Maranil PA-20® from Cognis) and 12g of a fatty alcohol ethoxylated with a mean ethoxylation corresponding to 28 moles of ethylene oxide per mole of fatty acid (Emulsogen EPN-287 ® from Clariant) at 70% concentration, and then heated under moderate stirring (*Stock*).

Simultaneously, and under vigorous stirring, the mixture of monomers (see Table 1) is added to a solution identical to the above solution but containing 556 g of water instead of 588, to produce an emulsion that remains stable for several hours and is placed in a dispensing funnel connected to the reaction vessel ("pre-emulsion").

For the sake of simplicity, we show only examples of the combinations of MAA with AA, where MAA refers to methacrylic acid and AA refers to acrylic acid in relation to various combinations of (a) and (b) monomers, and St/MMA/BA, where St relates to styrene, MMA to methyl methacrylate and BA to butyl acrylate.

**Table 1, where * = 2EHA Preferred monomers (c), in various combinations**

| **Trial** | **Monomers (a) and (b) St/MMA/BA*** | **Monomers (c)** | | **Total Total monomer(c)** |
|---|---|---|---|---|
| | | **AA** | **MAA** | |
| 808 | 10/20/70* | 0.5 | 0.5 | 1 |
| 1027 | 10/12/78 | 2 | 0 | 2 |
| 1111 | 10/10/80 | 0 | 2 | 2 |
| 1028 | 10/12/78 | 4 | 0 | 4 |
| 1141 | 10/10/80 | 2 | 2 | 4 |
| 1112 | 10/10/80 | 0 | 4 | 4 |
| 873 | 10/12/78 | 2 | 3 | 5 |
| 832 | 10/12/78 | 2 | 3 | 5 |
| 806 | 10/20/70* | 2 | 3 | 5 |
| 1029 | 10/12/78 | 6 | 0 | 6 |
| 1142 | 10/10/80 | 4 | 2 | 6 |
| 1039 | 10/12/78 | 3 | 3 | 6 |
| 1023 | 10/12/78 | 3 | 3 | 6 |
| 874 | 10/12/78 | 3 | 3 | 6 |
| 1045 | 10/12/78 | 2 | 4 | 6 |
| 875 | 10/12/78 | 2 | 4 | 6 |
| 1069 | 9/11/80 | 1 | 5 | 6 |
| 1070 | 8/8/84 | 1 | 5 | 6 |
| 1047 | 10/12/78 | 0 | 6 | 6 |
| 1071 | 8/7/85 | 0 | 7 | 7 |
| 1144 | 10/10/80 | 8 | 0 | 8 |
| 1143 | 10/10/80 | 6 | 2 | 8 |
| 1149 | 10/10/80 | 5 | 3 | 8 |
| 1145 | 10/10/80 | 4 | 4 | 8 |
| 1146 | 10/10/80 | 2 | 6 | 8 |
| 1113 | 8.3/8.3/83.3 | | 8.3 | 8.3 |

At the same time, a buffered solution of 5% ammonium peroxodisulphate in demineralised water (*catalyst*) is prepared and kept in another dispensing funnel connected to the reaction vessel.

Separately, small amounts of solutions of 16% ammonium peroxodisulphate, 10% sodium metabisulphite and 1% ferrous sulphate heptahydrate (*start-up catalysts*) are prepared.

When the stock has reached at least 50°C, some of the preemulsion is added, followed by 10cc of the start-up catalysts, except for the ferrous sulphate heptahydrate, only 3 cc of which is added.

The temperature is raised to 82°C and simultaneous addition of the rest of the preemulsion and the catalyst is carried out over some 90 to 180 minutes, following which the temperature is kept at around 85°C for a further 30 minutes.

The mixture is then cooled and neutralised with a 7.5% solution of ammonia until the pH is between 5 and 7 and it is filtered through a 180 micron mesh in order to remove possible coagulates or skin that might have formed.

The examples in which any monomer or other component have changed, in order better to illustrate the subject-matter of the invention, are indicated below.

### Evaluation of the results

### I) Embossing resistance:

The various lamination adhesives thus obtained and appropriately diluted with water in order to achieve a suitable weight are applied manually using a Meier bar suitable for depositing the required amount of the adhesive, according to each series of experiments, onto the treated side of the plastic PP film.

The adhesive is left to dry in a climatic chamber at 23°C and 55% relative humidity for between 3 and 6 hours depending on the amount deposited, following which it is laminated against a cardboard printing board of 325 microns (236 gr/m²) on the printed side with double pass of black offset ink (Pantone black), and the whole is passed through a laboratory laminator that applies moderate pressure and temperature to the laminate, imitating the way this is done on industrial laminating machines.

The laminates are thus prepared both at the usual grammages of around 9-10 gr/m2 dry and at low grammage, at the limits of the capacity of the adhesive to come into contact with the entire surface of the printed board, around 3-4 gr/m2 dry.

The laminates thus produced are left to rest in the climatic chamber under standard conditions (23°C and 55% RH) and never for more than 24h, and are then taken to be embossed on a Minerva-type printer from the Heidelberg firm (Germany).

The relief mould or stamp for the embossing trials was designed specifically for carrying out the series of experiments shown here.

The idea was to include, in so far as possible, all geometric shapes and reliefs, various letter types, joints and positive-negative combinations, circular shapes, squares, star shapes, multiples, figures, etc. Annexe 1 shows the design that was embossed on metal plate on a zinc side 2 mm thick.

A rubber counter-mould with a thickness of 1.75 mm was used.

The printer was adjusted with the mould and counter-mould in each series of experiments, in such a way that the embossing pressure was only slightly below the pressure that causes physical breakage of the laminates.

The tests were carried out both with gloss plastic PP film (TNT12 TTE from the firm Flex Industries Ltd.) and matt plastic film (Walothen 015 Matt from the firm Walothen GmbH), the latter being more difficult as regards achieving good embossing, and a total correspondence of results was found.

Likewise, apart from the black board, multicoloured boards were used upon which inks and designs of various colours had been superimposed. The results found again showed a complete correspondence with the black boards, as the ones that provide a better visual contrast and reveal in a more easily observable manner any adhesive defect or failure on the embossing edges.

By way of comparison, three well-known commercial products were used: Mowilith LDM-7255 (® from Celanese), and Acronal A-310 and Acronal A-311(® from Basf), some of them containing reactive or crosslinking systems in addition to the usual a, b and c monomers.

Moreover, the tests were carried out at the usual grammage of 9-10 gr/m², was well as at the lowest possible limit of 3-4 gr/m² in order to force to the utmost the embossing resistance properties of the adhesive.

In general, the values at low grammage tend to be worse than at the normal grammage, although the results show a near-perfect correlation. At the same time, an attempt was made to obviate in so far as possible small differences owing to the different wetting capacities of the different examples, minor application defects, presence of microfoam, etc.

The embossing results are shown in Table 2 below.

### Rating:

1, 2 = Poor. The plastic film peeled off entirely or in nearly all the embossing zones.
3 = Fair. The plastic film peeled away partially in the embossing zones.
4 = Good. The plastic film peeled away somewhat in some embossing zones.
5 = Very good. The plastic film did not peel away at all or hardly at all in any zone.

**Table 2**

| **Trial no.** | **Monomers (a) and (b) : St/MMA/BA** | **Monom. (c)** | | **Total monom. (c)** | **Final embossing 3gr/m2** | **Final embossing 9gr/m2** |
|---|---|---|---|---|---|---|
| | | **AA** | **MAA** | | | |
| 808 | 10/20/70(2EHA) | 0.5 | 0.5 | 1 | 1 | 1 |
| 1111 | 10/10/80 | 0 | 2 | 2 | 1 | 1 |
| 1142 | 10/10/80 | 4 | 2 | 6 | 1 | 1 |
| 1144 | 10/10/80 | 8 | 0 | 8 | 1 | 1 |
| 1149 | 10/10/80 | 5 | 3 | 8 | 1 | 1 |
| 1027 | 10/12/78 | 2 | 0 | 2 | 1 | 2 |
| 1141 | 10/10/80 | 2 | 2 | 4 | 1 | 2 |
| 1112 | 10/10/80 | 0 | 4 | 4 | 1 | 2 |
| 873 | 10/12/78 | 2 | 3 | 5 | 1 | 2 |
| 832 | 10/12/78 | 2 | 3 | 5 | 1 | 2 |
| 1029 | 10/12/78 | 6 | 0 | 6 | 1 | 2 |
| 1143 | 10/10/80 | 6 | 2 | 8 | 1 | 2 |
| 1145 | 10/10/80 | 4 | 4 | 8 | 1 | 2 |
| 1028 | 10/12/78 | 4 | 0 | 4 | 3 | 3 |
| 806 | 10/20/70(2EHA) | 2 | 3 | 5 | 2 | 3 |
| 1039 | 10/12/78 | 3 | 3 | 6 | 3 | 3 |
| 1045 | 10/12/78 | 2 | 4 | 6 | 3 | 3 |
| 875 | 10/12/78 | 2 | 4 | 6 | 3 | 3 |
| 1069 | 9/11/80 | 1 | 5 | 6 | 3 | 4 |
| 1146 | 10/10/80 | 2 | 6 | 8 | 3 | 4 |
| 1047 | 10/12/78 | 0 | 6 | 6 | 4 | 5 |
| 1071 | 8/7/85 | 0 | 7 | 7 | 4 | 5 |
| 1113 | 8.3/8.3/83.3 | 0 | 8.3 | 8.3 | 4 | 5 |
| A-310 | | | | | 1 | 1 |
| LDM-7255 | | | | | 2 | 2 |
| A-311 | | | | | 4-5 | 5 |

As can be seen, the embossing resistance values depend to a large extent on the type of (c) monomer and the total acid level. The best ratings are only achieved in the high acid level in which the MAA fraction in the (c) monomer is equal to or greater than half of the total (c) monomer, and especially in those in which, at acid levels above 5%, the amount of MAA in the (c) monomer predominates or is total, in accordance with the invention and claims stated.

In order to illustrate the invention better, examples 875 and 1045 are included, in which the anionic surfactant of a monosulphonic (Maranil PA-20) replaces a di-sulphonic (Dowfax 2A1), doubling the proportion over monomer from 0.5% to 1.0% while keeping the rest the same, examples 1047 and 1071 in which the proportion of (a) and (b) de monomers and therefore the Tg is altered, though maintaining both at a high level of MAA, and examples 873 and 832, of identical composition except that 873 includes an adherence-promoting monomer (Di-Acetone-Acrylamide) at 2.5% over the total monomers, for the purpose of illustrating the features that constitute the main nucleus of this patent, i.e. that the proportion and type of (c) monomers is the factor that in the absence of reactive or crosslinking systems most influences embossing resistance.

It should be noted that the laminates of Table 2 were re-inspected after six months and that their rating remained as shown in said table.

### II) Peel resistance:

The laminates on black board produced as explained in the preceding section were cut into strips 25mm wide and the initial peeling force measured 1 hour after the laminate had been produced.

The peeling force was determined by measuring on a Hounsfield dynamometer at 180° and 500 mm/minute of velocity. The values are expressed in Nw/25mm.

In the light of experience with this type of adhesives, the type and proportion of the (a) and (b) monomers would have been expected to have an influence on the Tg and on adherence. For this reason, they are shown in two separate tables (3 and 4) according to the composition of (a) and (b) monomers of the various trials.

**Table 3**

| **Trial No.** | **Monomers (a) and (b) St/MMA/BA** | **Monom. (c)** | | **Total monom. (c)** | **Initial adhesion 9gr/m2** | **AA fraction /Total monom.(c)** |
|---|---|---|---|---|---|---|
| | | **AA** | **MAA** | | | |
| 1144 | 10/10/80 | 8 | 0 | 8 | 1.45 | 1.0 |
| 1149 | 10/10/80 | 5 | 3 | 8 | 1.80 | 0.6 |
| 1142 | 10/10/80 | 4 | 2 | 6 | 1.85 | 0.7 |
| 1145 | 10/10/80 | 4 | 4 | 8 | 1.90 | 0.5 |
| 1141 | 10/10/80 | 2 | 2 | 4 | 2.35 | 0.5 |
| 1111 | 10/10/80 | 0 | 2 | 2 | 2.95 | 0.0 |
| 1069 | 9/11/80 | 1 | 5 | 6 | 3.75 | 0.2 |
| 1112 | 10/10/80 | 0 | 4 | 4 | 3.80 | 0.0 |

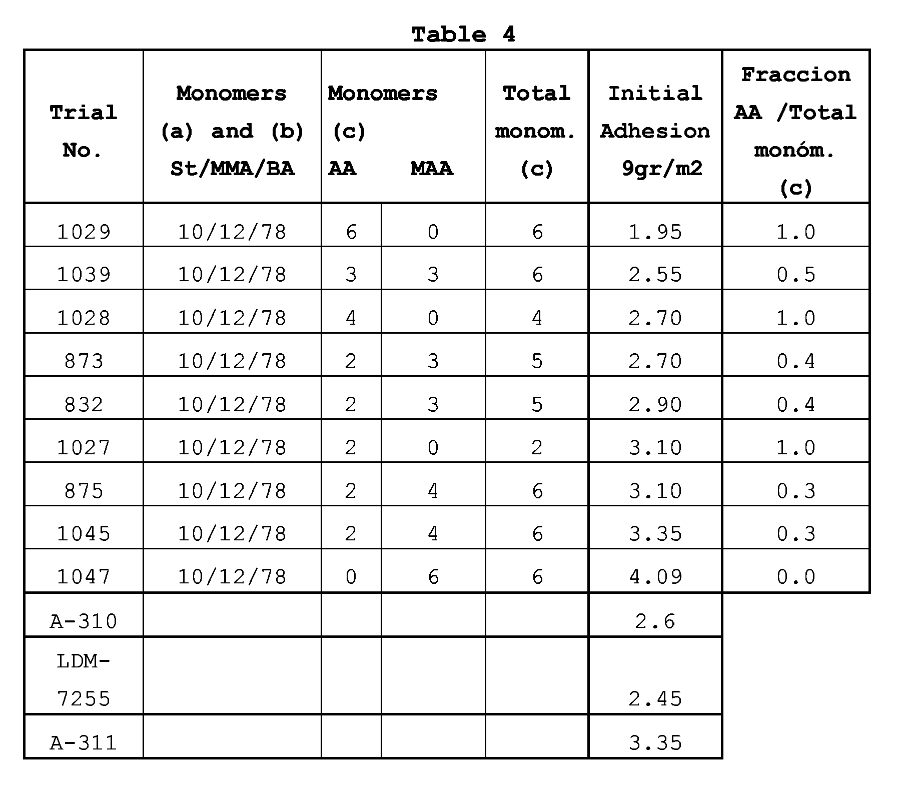

As can be seen from both Tables 3 and 4, the low peel resistance values pertain to high levels of AA, while the high peel resistance values pertain either to compositions of low acid content (as was to be expected), or to high acid values when the proportion of MAA in the mixture of acids exceeds 50% and, more particularly, when it exceeds 66% or when the MAA constitutes the totality of the (c) monomer.

Particularly illustrative (in Table 4) for the purposes of the present patent are examples 1029 and 1047, with the same 6% level of (c) monomer, the one containing only AA having the lowest peel value of the table, while the one containing 6% MAA is the one that shows the highest value.

It should be remembered here that indeed the latter (those with high (c) monomer and preferably MAA in their composition) are the ones that show better embossing resistance (Table 2).

Again, and in accordance with the object of the present patent, it should be noted that there is no direct correlation between the peel resistance values and the embossing resistance values.

Given that the quality of the embossing tends to evolve for the worse over time, in that the embossing quality is generally better at 24h than after 7 days or 4 weeks, the peel and embossing values were measured simultaneously after a given time (7 days). The values are shown in Table 5, in which the values relating to embossing quality are on a scale of 1 to 10 that is different from the scale in Table 2.

As Table 5 shows, high peel values (examples 808 and 1027 higher than 3 Nw/25mm) gave rise to poor results in terms of embossing resistance, while the comparatively lower peel values (examples 1029 and 1028, lower than 2.5 Nw/25mm) produced embossing resistance values higher than the above values.

**Table 5**

| **Trial No.** | **Adhesion 7 days 9gr/m2** | **Embossing 7 days 9gr/m2** |
|---|---|---|
| 1144 | 1.75 | 1.00 |
| 1111 | 2.80 | 2.00 |
| 808 | 3.05 | 2.00 |
| 1027 | 3.09 | 2.00 |
| 1142 | 2.25 | 3.00 |
| 1141 | 2.70 | 3.00 |
| 1149 | 1.95 | 5.00 |
| 1145 | 2.20 | 5.00 |
| 1143 | 2.50 | 5.00 |
| 832 | 2.87 | 5.00 |
| 873 | 3.00 | 5.00 |
| 1029 | 2.10 | 6.00 |
| 806 | 3.05 | 6.00 |
| 1112 | 3.09 | 7.00 |
| 1028 | 2.40 | 8.00 |
| 875 | 3.00 | 8.00 |
| 1146 | 2.60 | 9.00 |
| 1045 | 3.03 | 9.00 |
| 1069 | 3.85 | 9.00 |
| 1039 | 2.55 | 10.00 |
| 1113 | 2.90 | 10.00 |
| 1071 | 3.35 | 10.00 |
| 1047 | 3.70 | 10.00 |

In accordance with the claims of this application, the combination of high level of (c) monomer and high MAA fraction therein is thus the only one capable of producing, simultaneously and unexpectedly, very good initial peel and embossing resistance values.

These high acid values furthermore help to provide excellent mechanical stability, this being a decisive property for the behaviour of the adhesive on high-speed machines, together with lower residual tack than their homologues of low acid level, which assists subsequent handling of the laminate ("quick converting") and reduces the disadvantages of bleeding of the adhesive at the edges and in the cutting zones ("edge-bleeding").

## Claims

1. Monomeric composition that comprises:
(a) from 0% to 50% of at least a monomer a) whose homopolymer has a glass transition temperature (Tg) higher than 0°C;
(b) from 50% to 100% of a single monomer b) whose homopolymer has a glass transition temperature (Tg) lower than 0°C;
(c) from 4% to 12%, calculated over the sum of (a) + (b) monomers, of at least one monomer c) copolymerisable with the foregoing and that contains a free acid group or a group capable of producing same and that has no functionality other than the aforesaid one;
(d) from 0% to 20%, calculated over the sum of (a) + (b) monomers, of at least another monomer d) copolymerisable with the aforesaid.

2. Monomeric composition according to claim 1, **characterised in that** it comprises:
- between 5% and 25 % of at least one monomer a);
- between 75% and 95% of a single monomer b);
- between 5% and 10% of at least one monomer c) calculated over (a) + (b);
- between 0% and 5% of at least one monomer d) calculated over (a) + (b).

3. Monomeric composition according to claim 1, **characterised in that** the monomer a) is selected between styrene and derivatives thereof.

4. Monomeric composition according to claim 3, where said monomer a) is selected between alpha-methyl and para-methyl styrene.

5. Monomeric composition according to claim 1, **characterised in that** the monomer a) is selected between a methacrylic and acrylic ester.

6. Monomeric composition according to claim 5, where said monomer a) is selected from methyl methacrylate, butyl methacrylate or isobutyl methacrylate.

7. Monomeric composition according to claim 1, **characterised in that** the monomer a) is selected between a vinyl ester or vinyl halide.

8. Monomeric composition according to claim 7, where said monomer a) is selected from vinyl acetate, vinyl propionate and vinyl chloride.

9. Monomeric composition according to claim 1, **characterised in that** the monomer a) is selected from an acrylic nitrile.

10. Monomeric composition according to claim 9, where said monomer a) is selected between acrylonitrile and methacrylonitrile.

11. Monomeric composition according to claim 1, **characterised in that** the monomer b) is selected from an acrylic acid ester with C₂ to C₁₂ alkanols.

12. Monomeric composition according to claim 11, where said monomer b) is selected from an acrylate of ethyl, methyl, butyl and 2-ethyl-hexyl.

13. Monomeric composition according to claim 1, **characterised in that** the monomer c) is selected from acrylic acid, methacrylic acid, itaconic acid, maleic acid, vinylsulphonic acid, acrylamidopropylsulphonic acid or their corresponding anhydrides, salts, hemiesters or any other derivative capable of providing at least one acid group.

14. Monomeric composition according to claim 1, **characterised in that** the monomer c) includes mixtures of methacrylic acid with other monomers c).

15. Monomeric composition according to claim 14, **characterised in that** the amount of methacrylic acid in relation to the total monomer c) is at least 20%.

16. Monomeric composition according to claim 14, **characterised in that** the amount of methacrylic acid is greater than 50% in relation to the total monomer c).

17. Monomeric composition according to claim 14, **characterised in that** the amount of methacrylic acid is 100% of the total monomer c).

18. Monomeric composition according to claim 14, where the monomer c) is selected from a mixture of acrylic acid and methacrylic acid representing from 4% to 12%, calculated over the sum of (a) + (b) monomers.

19. Monomeric composition according to claim 18, where the monomer c) is selected from a mixture of acrylic acid and methacrylic acid representing from 5% to 10%, calculated over the sum of (a) + (b) monomers.

20. Monomeric composition according to claim 14, where the monomer c) is selected from a mixture of acrylic acid and methacrylic acid such that the proportion of methacrylic acid in the mixture of the two acids is at least 25% of the total mixture of both.

21. Monomeric composition according to claim 1, where the monomer d) contains no group or function other than the double C=C bond that characterises all monomers.

22. Monomeric composition according to claim 1, where the monomer d) is capable of carrying out specific crosslinking reactions with the other monomers that make up the polymeric composition or with itself.

23. Monomeric composition according to claim 1, where the d) monomer is capable of carrying out specific crosslinking reactions with other reactive components added once the polymerisation process of the a), b), c) and d) monomers has been completed.

24. Monomeric composition according to claim 1, **characterised in that** it includes between 0.1% and 10%, calculated over the total present monomers, anionic surfactants, non-ionic surfactants, water-soluble protective colloids or mixtures thereof.

25. Monomeric composition according to claim 24, in which the water-soluble protective colloids are selected from polyvinyl alcohol (PvOH), carboxymethyl cellulose (CMC), hydroxyethyl cellulose (HEC), hydroxymethylpropyl cellulose (HMPC), dextrins, guar and gum arabic.

26. Copolymer obtainable by polymerisation of the monomeric composition according to any of claims 1 to 25.

27. Copolymer according to claim 26, where said polymerisation is selected between polymerisation by free radicals in aqueous emulsion, miniemulsion, suspension and in solvent.

28. Copolymer according to claim 26, **characterised in that** it presents a glass transition temperature (Tg) between -60°C and + 60°C.

29. Copolymer according to claim 26, **characterised in that** it present a glass transition temperature (Tg) between -40°C and + 40°C.

30. Copolymer according to claim 26, **characterised in that** it presents a glass transition temperature (Tg) between -35°C and + 25°C.

31. Aqueous dispersion that includes a copolymer according to any of claims 26 to 30.

32. Aqueous dispersion according to claim 31, **characterised in that** said copolymer is present in the dispersion at a concentration of between 30% and 75% in relation to the water.

33. Aqueous dispersion according to claim 31, **characterised in that** said copolymer is present in the dispersion at a concentration of between 40% and 60% in relation to the water.

34. Aqueous dispersion according to any of claims 31 to 33, that further includes coadjuvants such as wetting agents, levellers, anti-foaming agents, thickeners, rheology modifiers, pH regulators, antioxidants, crosslinking agents, adherence promotors and/or biocides.

35. Use of an aqueous dispersion according to any of claims 31 to 34 for lamination adhesives.

36. Use of an aqueous dispersion according to claim 35 for Graphic Arts adhesives.
